(19) Europäisches Patentamt
European Patent Office
Office européen des brevets

(11) **EP 4 586 144 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
***G06N 3/0464*** (2023.01)

(21) Application number: **23870605.5**

(52) Cooperative Patent Classification (CPC):
**G06N 3/0464; G06N 3/084**

(22) Date of filing: **22.09.2023**

(86) International application number:
**PCT/CN2023/120541**

(87) International publication number:
**WO 2024/067373 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211214438**

(71) Applicant: **Huawei Technologies Co., Ltd.
Shenzhen, Guangdong 518129 (CN)**

(72) Inventors:
• **REN, Xiaozhe**
  **Shenzhen, Guangdong 518129 (CN)**
• **ZHOU, Pingyi**
  **Shenzhen, Guangdong 518129 (CN)**
• **MENG, Xinfan**
  **Shenzhen, Guangdong 518129 (CN)**
• **WANG, Yasheng**
  **Shenzhen, Guangdong 518129 (CN)**
• **WEI, Jiansheng**
  **Shenzhen, Guangdong 518129 (CN)**
• **JIANG, Xin**
  **Shenzhen, Guangdong 518129 (CN)**
• **SU, Teng**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA PROCESSING METHOD AND RELATED APPARATUS**

(57)    A data processing method is provided, applied to the field of artificial intelligence. The method includes: determining, based on a target mapping relationship, one or more target network units corresponding to a target word vector and a storage address, where storage space corresponding to the storage address is located in storage space outside a computing unit; obtaining the one or more target network units from the storage space; and performing, through the computing unit based on the target word vector, a training process corresponding to a neural network constructed based on the one or more target network units. **In** this application, a target network unit in a large-scale model is stored in a storage location outside a computing unit. Therefore, when a current training sample is a corresponding word vector, one or more corresponding target network units are extracted from the storage location outside the computing unit. Because storage space of the storage location outside the computing unit may be set to be relatively large, through separation of storage and compute, a size of the large-scale model during training can be increased and scalability and flexibility of the large-scale model can be improved.

Determine, based on a target mapping relationship, one or more target network units corresponding to a target word vector token and a storage address of the one or more target network units, where storage space corresponding to the storage address is located in storage space outside a computing unit — 501

Obtain the one or more target network units from the storage space corresponding to the storage address, where the one or more target network units are configured to construct a neural network — 502

Perform, through the computing unit based on the target word vector, a training process corresponding to the neural network — 503

FIG. 5

**Description**

This application claims priority to Chinese Patent Application No. 202211214438.0, filed with the China National Intellectual Property Administration on September 30, 2022 and entitled "DATA PROCESSING METHOD AND RELATED APPARATUS".

## TECHNICAL FIELD

This application relates to the field of artificial intelligence, and in particular, to a data processing method and a related apparatus.

## BACKGROUND

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

In recent years, with the rapid development of computing chip technologies and large-scale computing clusters, an increasing quantity of large models are emerging, and large models with hundreds of billions or even trillions of parameters become a mainstream technology trend recently and even for some time in the future. However, a core problem of the large model lies in extremely high training and usage costs. The large model usually needs an ultra-large-scale cluster including hundreds or even thousands of computing units such as GPUs, TPUs, or NPUs to perform computation for weeks or even months, resulting in costs ranging from millions to tens of millions of dollars. Another problem related to the core problem is how to design and train such a high-cost model to fully unleash value of the model and to prepare for possible unknown future application scenarios at the beginning of design. Given the high costs, it is impossible to retrain the model repeatedly. Therefore, there is a need for a form to preserve previous training results and prepare for possible future application scenarios.

In an implementation solution, a large-scale model may be divided into a plurality of network units, and corresponding network units are configured for different input samples (for example, different word vectors). When an input sample is used to train the model, only a network unit corresponding to the input sample among the plurality of network units is updated, and an updated network unit is stored for invocation in a next update.

In conventional technologies, a memory in a computing unit is usually used to store a large model. The memory in the computing unit is relatively small, limiting a size of the large-scale model.

## SUMMARY

This application provides a data processing method, to increase a size of a large-scale model, and improve scalability and flexibility of the large-scale model.

According to a first aspect, an embodiment of this application provides a data processing method. The method includes: determining, based on a target mapping relationship, one or more target network units corresponding to a target word vector (token) and a storage address of the one or more target network units, where storage space corresponding to the storage address is located in storage space outside a computing unit; obtaining the one or more target network units from the storage space corresponding to the storage address, where the one or more target network units are used to construct a neural network; and performing, through the computing unit based on the target word vector, a training process corresponding to the neural network.

A target network unit in a large-scale model is stored in a storage location outside a computing unit. Therefore, when a current training sample is a corresponding word vector, one or more corresponding target network units are extracted from the storage location outside the computing unit. Because storage space of the storage location outside the computing unit may be set to be relatively large, through separation of storage and compute, a size of the large-scale model can be increased and scalability and flexibility of the large-scale model can be improved.

In a possible implementation, the target network unit is a feed-forward network FFN.

In a possible implementation, the computing unit is a graphics processing unit GPU, a tensor processing unit TPU, or a neural-network processing unit NPU.

In a possible implementation, the storage space corresponding to the storage address is located in a memory, a network storage, or a hard disk.

In a possible implementation, the target mapping relationship includes a first target mapping relationship, the first target mapping relationship indicates a plurality of word vectors and one or more network units corresponding to each word vector, and the first target mapping relationship is specifically a mapping table.

In conventional technologies, a mapping relationship between a training sample (a word vector (token)) and a network unit is constructed by using a hash (hash). In a hash, one training sample can correspond to only one network unit, and there is a value range limitation of the hash. Therefore, as the training sample increases, a large quantity of different training samples may correspond to a same network unit, which affects precision of a trained model. In this application, the mapping relationship between the training sample (a word vector (token)) and the network unit is recorded by using a mapping table, so that one training sample can correspond to a plurality of network units. In addition, because there is no value range limitation, a large quantity of different training samples do not correspond to a same network unit, which can increase the precision of the trained model.

In a possible implementation, the performing, through the computing unit, a training process corresponding to the target neural network is for obtaining an updated target neural network, the updated target neural network includes one or more updated target network units, and the method further includes: updating, based on the one or more updated target network units, data in the storage space corresponding to the storage address.

In a possible implementation, before the determining, based on a target mapping relationship, one or more target network units corresponding to a target word vector and a storage address of the one or more target network units, the method further includes: receiving modification information of a user for a second target mapping relationship, where the second target mapping relationship includes a plurality of word vectors and a network unit corresponding to each word vector; and modifying the second target mapping relationship based on the modification information, to obtain the target mapping relationship.

In a possible implementation, the modification information indicates at least one of the following: deleting, replacing, or adding a network unit corresponding to at least one word vector in the second target mapping relationship; and deleting, replacing, or adding a mapping relationship included in the second target mapping relationship, where the mapping relationship is a word vector and a network unit corresponding to the word vector.

In a possible implementation, before the determining, based on a target mapping relationship, one or more target network units corresponding to a target word vector and a storage address of the one or more target network units, the method further includes: in the process of training the neural network based on the target word vector, adding, based on a case in which a decrease degree of a training loss is less than a threshold, a network unit corresponding to the target word vector in a second target mapping relationship, to obtain the target mapping relationship. When the decrease degree of the training loss is relatively low, it may indicate that current performance of the model cannot be further improved. In this case, a network unit may be added to change a structure of the neural network, so that the training loss can continue to decrease.

In a possible implementation, the target mapping relationship includes a plurality of word units and a network unit corresponding to each word unit, and the method further includes:
determining, based on a converged neural network, a network unit corresponding to a part of the word units from the plurality of word units included in the target mapping relationship, where the network unit that corresponds to the part of the word units and that is in the converged neural network is used to construct the target neural network, and the target neural network is used to perform model inference.

According to a second aspect, this application provides a data processing apparatus. The apparatus includes:

a processing module, configured to: determine, based on a target mapping relationship, one or more target network units corresponding to a target word vector (token) and a storage address of the one or more target network units, where storage space corresponding to the storage address is located in storage space outside a computing unit; and obtain the one or more target network units from the storage space corresponding to the storage address, where the one or more target network units are used to construct a neural network; and
a model training module, configured to perform, through the computing unit based on the target word vector, a training process corresponding to the neural network.

In a possible implementation, the target network unit is a feed-forward network FFN.

In a possible implementation, the computing unit is a graphics processing unit GPU, a tensor processing unit TPU, or a neural-network processing unit NPU.

In a possible implementation, the storage space corresponding to the storage address is located in a memory, a network storage, or a hard disk.

In a possible implementation, the target mapping relationship includes a first target mapping relationship, the first target mapping relationship indicates a plurality of word vectors and one or more network units corresponding to each word vector, and the first target mapping relationship is specifically a mapping table.

In a possible implementation, the performing, through the computing unit, a training process corresponding to the target neural network is for obtaining an updated target neural network, the updated target neural network includes one or more updated target network units, and the processing module is further configured to:
update, based on the one or more updated target network units, data in the storage space corresponding to the storage address.

In a possible implementation, before the determining, based on a target mapping relationship, one or more target network units corresponding to a target word vector and a storage address of the one or more target network units, the processing module is further configured to:

receive modification information of a user for a second target mapping relationship, where the second target mapping relationship includes a plurality of word vectors and a network unit corresponding to each word vector; and

modify the second target mapping relationship based on the modification information, to obtain the target mapping relationship.

In a possible implementation, the modification information indicates at least one of the following:

deleting, replacing, or adding a network unit corresponding to at least one word vector in the second target mapping relationship; and

deleting, replacing, or adding a mapping relationship included in the second target mapping relationship, where the mapping relationship is a word vector and a network unit corresponding to the word vector.

In a possible implementation, before the determining, based on a target mapping relationship, one or more target network units corresponding to a target word vector and a storage address of the one or more target network units, the processing module is further configured to:
in the process of training the neural network based on the target word vector, add, based on a case in which a decrease degree of a training loss is less than a threshold, a network unit corresponding to the target word vector in a second target mapping relationship, to obtain the target mapping relationship.

In a possible implementation, the target mapping relationship includes a plurality of word units and a network unit corresponding to each word unit, and the processing module is further configured to:
determine, based on a converged neural network, a network unit corresponding to a part of the word units from the plurality of word units included in the target mapping relationship, where the network unit that corresponds to the part of the word units and that is in the converged neural network is used to construct the target neural network, and the target neural network is used to perform model inference.

According to a third aspect, an embodiment of this application provides a data processing apparatus. The apparatus may include a storage, a processor, and a bus system. The storage is configured to store a program, and the processor is configured to execute the program in the storage, to perform the method according to any one of the optional implementations of the first aspect.

According to a fourth aspect, an embodiment of this application provides a computer-readable storage medium. The computer-readable storage medium stores a computer program, and when the computer program is run on a computer, the computer is enabled to perform the method according to the first aspect or any one of the optional implementations of the first aspect.

According to a fifth aspect, an embodiment of this application provides a computer program product, including code. When the code is executed, the code is used to implement the method according to the first aspect or any one of the optional implementations of the first aspect.

According to a sixth aspect, this application provides a chip system. The chip system includes a processor, configured to support a data processing apparatus in implementing functions in the foregoing aspects, for example, sending or processing data or information in the foregoing method. In a possible design, the chip system further includes a storage. The storage is configured to store program instructions and data that are necessary for an execution device or a training device. The chip system may include a chip, or may include a chip and another discrete component.

## BRIEF DESCRIPTION OF DRAWINGS

FIG. 1 is a diagram of a structure of an artificial intelligence main framework;

FIG. 2 is a diagram of a framework of an application system according to the present invention;

FIG. 3 is a diagram of a framework of an application system according to the present invention;

FIG. 4A is a diagram of a structure of a network;

FIG. 4B is a diagram of a structure of a network;

FIG. 5 is a schematic flowchart of a data processing method;

FIG. 6 is a schematic flowchart of a data processing method;

FIG. 7 is a schematic flowchart of a data processing method;

FIG. 8 is a schematic flowchart of a data processing method;

FIG. 9 is a schematic flowchart of a data processing method;

FIG. 10 is a schematic flowchart of a data processing method;

FIG. 11 is a schematic flowchart of a data processing method;

FIG. 12 is a diagram of a structure of a data processing apparatus according to an embodiment of this application;

FIG. 13 is a diagram of an execution device according to an embodiment of this application;

FIG. 14 is a diagram of a training device according to an embodiment of this application; and

FIG. 15 is a diagram of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with the development of technologies and emergence of a new scenario, the technical solutions provided in embodiments of this application are also applicable to a similar technical problem.

In the specification, claims, and accompanying drawings of this application, the terms "first", "second", and the like are intended to differentiate similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

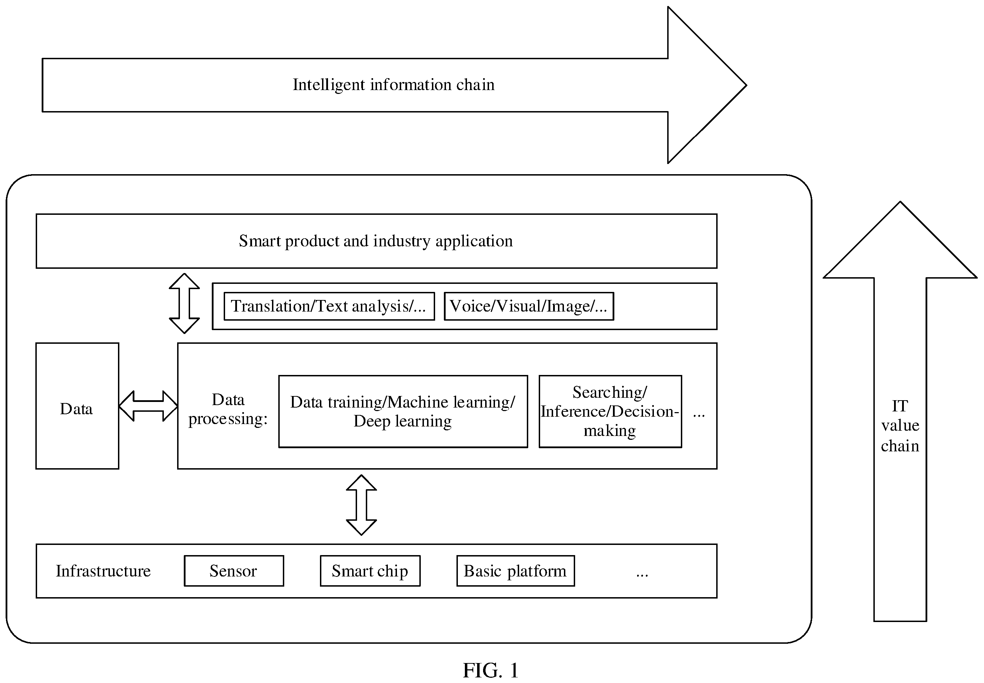

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the "intelligent information chain" may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside through a sensor. A computing capability is provided by an intelligent chip (a hardware acceleration chip, such as a CPU, an NPU, a GPU, an ASIC, or an FPGA). The basic platform may include related platforms, for example, a distributed computing framework and a network, for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, voice, and text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may be performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision-making is a process of making a decision after intelligent information is inferred, and usually provides functions such as classification, ranking, and prediction.

(4) General capability

After the data processing mentioned above is performed on the data, some general capabilities may further be formed based on a data processing result. For example, the general capability may be an algorithm or a general system, for example, translation, text analysis, computer vision processing, speech recognition, or image recognition.

(5) Smart product and industry application

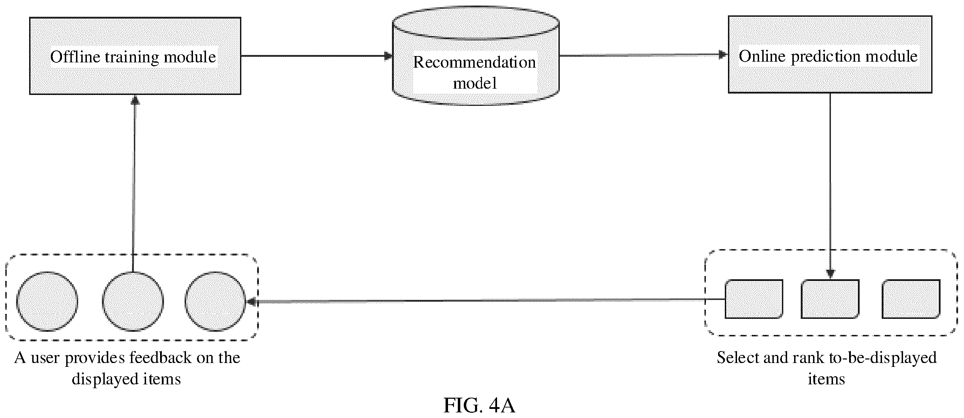

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.
Embodiments of this application may be applied to the information recommendation field. The scenario includes but is not limited to scenarios related to e-commerce product recommendation, search engine result recommendation, application market recommendation, music recommendation, and video recommendation. A recommended item in various different application scenarios may also be referred to as an "object" for ease of subsequent description. That is, in different recommendation scenarios, the recommended object may be an app, a video, music, or a commodity (for example, a presentation interface of an online shopping platform displays different commodities according to different users, which may also be displayed based on a recommendation result of a recommendation model in essence). These recommendation scenarios usually involve collection of a user behavior log, log data preprocessing (for example, quantization and sampling), sample set training to obtain a recommendation model, and analyze and process, based on the recommendation model, an object (for example, an app or music) in a scenario corresponding to a training sample item. For example, if a sample selected in a training process of the recommendation model is from an operation performed by a user of an application market in a mobile phone on a recommended app, a trained recommendation model is applicable to the app application market in the mobile phone, or may be used in an app application market in another type of terminal to recommend an app in the terminal. The recommendation model finally computes recommendation probabilities or scores of to-be-recommended objects. Recommendation results selected by the recommendation system according to a specific selection rule. For example, the to-be-recommended objects are ranked based on the recommendation probabilities or the scores, and are presented to the user through a corresponding application or terminal device. The user performs an operation on an object in the recommendation results to perform a process such as generating a user behavior log.
Refer to FIG. 4A. In a recommendation process, when a user interacts with a recommendation system, a recommendation request is triggered. The recommendation system inputs the request and related feature information into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs user behavior, such as browsing, clicking, and downloading. The user behavior is stored in a log as training data. An offline training module irregularly updates a parameter of the recommendation model to improve recommendation effect of the model.

For example, when a user starts an application market in a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged at a front location, and an application that is less likely to be downloaded is arranged at a back location. User behavior is also stored in a log, and an offline training module trains and updates a parameter of a prediction model.

For another example, in an application related to a life-long companion, a cognitive brain may be constructed by simulating a mechanism of a human brain and based on historical data of a user in domains such as video, music, and news by using various models and algorithms, thereby establishing a life-long learning system framework for the user. The lifelong companion may record a past event of the user based on system data, application data, and the like, understand a current intention of the user, predict a future action or future behavior of the user, and finally implement an intelligent service. In a current first stage, user behavior data (including information such as a device-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

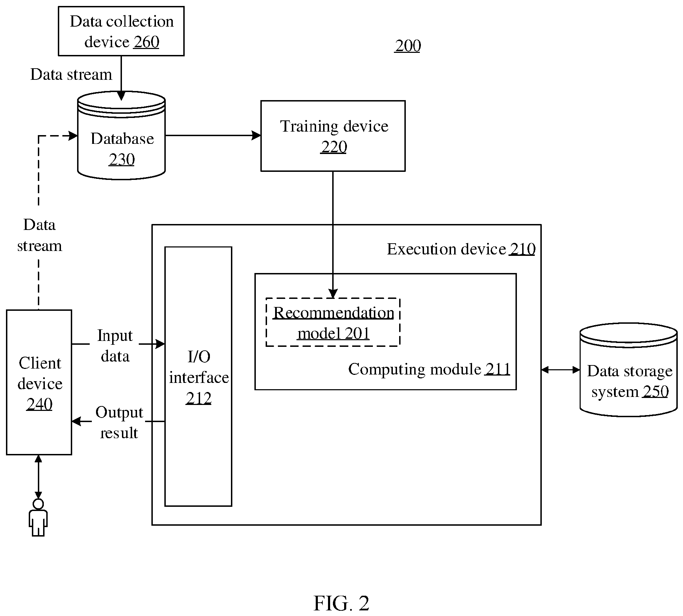

Refer to FIG. 2. An embodiment of the present invention provides a recommendation system architecture 200. A data collection device 260 is configured to collect a sample. One training sample may include a plurality of pieces of feature information (alternatively described as attribute information, for example, a user attribute and an item attribute). There may be a plurality of types of feature information, which may specifically include user feature information, object feature information, and a label feature. The user feature information represents a feature of a user, for example, a gender, an age, an occupation, or a hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Usually a label feature of a sample may be obtained based on information about an operation performed by the user on a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is a positive sample; or if the user does not perform any operation on the recommended object, the label feature is 0, indicating that the sample is a negative sample. The sample may be stored in a database 230 after being collected. A part or all of feature information in the sample in the database 230 may be directly obtained from a client device 240, for example, user feature information, information (used to determine a type identifier) about an operation performed by the user on an object, and object feature information (for example, an object identifier). A training device 220 performs training based on a sample in the database 230 to obtain a model parameter matrix for generating a recommendation model 201. The following describes in more detail how the training device 220 performs training to obtain the model parameter matrix for generating the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A computing module 211 obtains a recommendation result based on the evaluation result of the recommendation model 201, and recommends the recommendation result to the client device through an I/O interface 212.

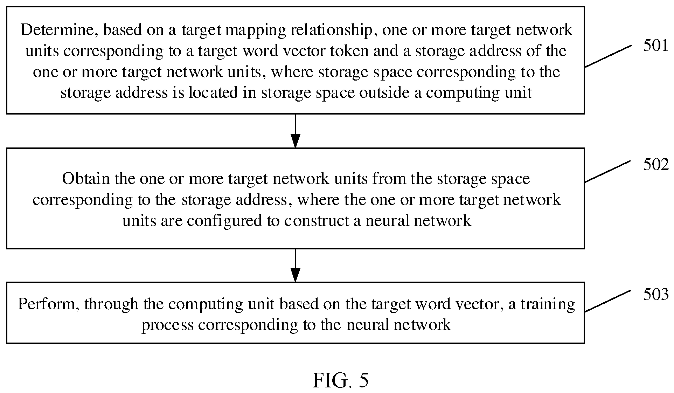

In this embodiment of this application, the training device 220 may select positive and negative samples from a sample set in the database 230, add the positive and negative samples to a training set, and then perform training based on the samples in the training set by using a recommendation model, to obtain a trained recommendation model. For implementation details of the computing module 211, refer to detailed descriptions of a method embodiment shown in FIG. 5.

After the training device 220 performs training based on the sample to obtain the model parameter matrix and the recommendation model 201 is constructed by using the model parameter matrix, the training device 220 sends the recommendation model 201 to an execution device 210; or the training device 220 directly sends the model parameter matrix to the execution device 210, and the recommendation model is constructed in the execution device 210, for recommendation of a corresponding system. For example, a recommendation model obtained through training based on a video-related sample may be used in a video website or app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, a user identifier, a user identity, a gender, an occupation, and a hobby, from the client device 240 through the I/O interface 212. This information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object ranked higher is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that, FIG. 2 is merely a diagram of a system architecture according to an embodiment of the present invention. A position relationship between devices, components, modules, and the like shown in the figure does not constitute any limitation. For example, in FIG. 2, the data storage system 250 is an external storage relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

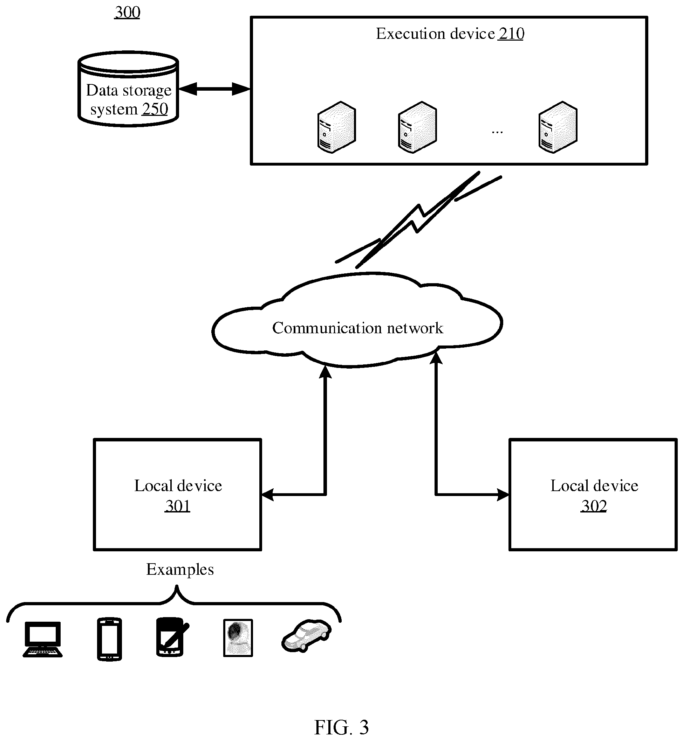

Refer to FIG. 3. An embodiment of the present invention provides a system architecture 300. In this architecture, an execution device 210 is implemented by one or more servers. Optionally, the execution device 210 works with another computing device, for example, a device such as a data storage device, a router, or a load balancer. The execution device 210 may be disposed on one physical site, or distributed on a plurality of physical sites. The execution device 210 may use data in a data storage system 250 or invoke program code in a data storage system 250 to implement an object recommendation function. Specifically, the execution device 210 inputs information about to-be-recommended objects to a recommendation model, and the recommendation model generates estimated scores for to-be-recommended objects. Then, the execution device 210 ranks the to-be-recommended objects in descending order of the estimated scores, and recommends a to-be-recommended object to a user based on the ranking result. For example, the execution device 210 recommends top 10 objects in the ranking result to the user.

The data storage system 250 is configured to receive and store a parameter that is of the recommendation model and that is sent by a training device, is configured to store data of a recommendation result obtained by using the recommendation model, and certainly may further include program code (or an instruction) needed for normal operation of the storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data needed by the execution device to the execution device 210. Correspondingly, the execution device 210 receives and stores (or buffers) the data. Certainly, the data storage system 250 may be alternatively deployed in the execution device 210. When deployed in the execution device 210, the distributed storage system may include one or more storages. Optionally, when there are a plurality of storages, different storages are configured to store different types of data, for example, the model parameter of the recommendation model generated by the training device and the data of the recommendation result obtained by using the recommendation model may be stored in two different memories respectively.

Users may perform operations on user equipments of the users (for example, a local device 301 and a local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communication network compliant with any communication mechanism/communication standard. The communication network may be a wide area network, a local area network, a point-to-point connection, or any combination thereof.

In another implementation, the execution device 210 may be implemented by a local device. For example, the local device 301 may implement a recommendation function of the execution device 210 based on a recommendation model by obtaining user feature information and feeding back a recommendation result to the user, or provide a service for the user of the local device 302.

Embodiments of this application relate to massive application of a neural network. Therefore, for ease of understanding, the following first describes terms and concepts related to the neural network in embodiments of this application.

1. Click-through rate (click-through rate, CTR)

The click-through rate, also referred to as a click-through ratio, is a ratio of a quantity of clicks for recommendation information (for example, a recommended item) on a website or an application to a quantity of impressions for the recommendation information. The click-through rate is usually an important indicator in a recommendation system for measuring the recommendation system.

2. Personalized recommendation system

The personalized recommendation system is a system that analyzes historical data of a user (for example, operation information in embodiments of this application) by using a machine learning algorithm, and with this, predicts a new request and provides a personalized recommendation result.

3. Offline training (offline training)

The offline training is a module, in a personalized recommendation system, that iteratively updates a parameter of a recommendation model by using a machine learning algorithm based on historical data of a user (for example, operation information in embodiments of this application) until a specified requirement is met.

4. Online inference (online inference)

The online inference is to predict, based on a model obtained through offline training, preference of a user for a recommended item in a current context environment based on features of the user, the item, and a context, and predict a probability that the user selects the recommended item.

For example, FIG. 4A is a diagram of a recommendation system according to an embodiment of this application. As shown in FIG. 4A, when a user enters a system, a recommendation request is triggered. The recommendation system inputs the request and related information (for example, operation information in this embodiment of this application) of the request to a recommendation model, and then predicts selection rates of the user for items in the system. Further, the items are ranked in descending order of the predicted selection rates or a function of the selection rates. That is, the recommendation system may sequentially display the items at different locations as a recommendation result for the user. The user browses the items at different locations, and performs user behavior such as browsing, selecting, and downloading. In addition, the actual behavior of the user is stored in a log as training data. An offline training module continuously updates a parameter of the recommendation model to improve prediction effect of the model.

For example, when the user starts an application market in a smart terminal (for example, a mobile phone), a recommendation system in the application market may be triggered. The recommendation system in the application market predicts probabilities that the user downloads candidate recommended apps, based on a historical behavior log of the user, for example, a historical download record of the user and a user selection record, and a feature of the application market, for example, environment feature information such as time and a location. The recommendation system in the application market may present the candidate apps in descending order of values of the predicted probabilities based on a computing result, to increase download probabilities of the candidate apps.

For example, an APP with a relatively high predicted user selection rate may be displayed at a front recommendation location, and an APP with a relatively low predicted user selection rate may be displayed at a back recommendation location.

The recommendation model may be a neural network model. The following describes related terms and concepts of a neural network that may be used in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}(x) = f\left(W^T x\right) = f\left(\sum_{s=1}^{n} W_s x_s + b\right)$$

s=1, 2, ..., and n. n is a natural number greater than 1. $W_s$ represents a weight of $x_s$. b represents a bias of the neuron. f represents an activation function (activation function) of the neuron. The activation function is used to introduce a non-linear characteristic into the neural network, to convert an input signal in the neuron into an output signal. The output signal of the activation function may be used as an input of a next convolutional layer, and the activation function may be a sigmoid function. The neural network is a network formed by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. There is no special measurement criterion for "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. $\vec{x}$ represents an input vector, $\vec{y}$ represents an output vector, b represents an offset vector, W represents a weight matrix (also referred to as a coefficient), and $\alpha()$ represents an activation function. At each layer, the output vector $\vec{y}$ is obtained by performing such a simple operation on the input vector $\vec{x}$. Because the DNN has a large quantity of layers, there are a large quantity of coefficients W and offset vectors b. Definitions of these parameters in the DNN are as follows: The coefficient W is used as an example. It is assumed that in a DNN having three layers, a linear coefficient from a fourth neuron at a second layer to a second neuron at a third layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

(3) Loss function

In a process of training a deep neural network, because it is expected that an output of the deep neural network is maximally close to a predicted value that is actually expected, a current predicted value of the network and a target value that is actually expected may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain a difference between the predicted value and the target value through comparison" needs to be predefined. This is a loss function (loss function) or an objective function (objective function). The loss function and the objective function are important equations for measuring the difference between the predicted value and the target value. The loss function is used as an example. A higher output value (loss) of the loss function indicates a larger difference. Therefore, training of the deep neural network is a process of minimizing the loss.

(4) Back propagation algorithm

An error back propagation (back propagation, BP) algorithm may be used to correct a value of a parameter of an initial model in a training process, so that an error loss of the model becomes smaller. Specifically, an input signal is transferred forward until an error loss is generated in an output, and the parameter of the initial model is updated based on through back propagation of information about the error loss, to converge the error loss. The back propagation algorithm is an error-loss-centered back propagation motion intended to obtain a parameter, such as a weight matrix, of an optimal model.

(5) Machine learning system

The machine learning system trains parameters of a machine learning model based on input data and labels by using an optimization method such as gradient descent, and finally makes a prediction on unknown data by using a trained model.

(6) Personalized recommendation system

The personalized recommendation system is a system that analyzes and models historical data of a user by using a machine learning algorithm, and with this, predicts a new user request and provides a personalized recommendation result.

(7) Mixture of experts: In a neural network, each linear layer is regarded as an expert, and a plurality of linear layers operate in parallel. Outputs of one or more experts are weighted and averaged, and a result is output to a next layer.

(8) Computational graph: The computational graph is a computational graph structure constructed from operations described by a user through a deep neural network framework, and usually describes an entire computing process of a deep neural network, including forward propagation, backward propagation, and a parameter update.

(9) Memory network: The memory network transforms an input into an internal vector in the network, and stores the vector in a memory matrix.

(10) Routing: Routing is a function that controls a mapping relationship between input data and a network module.

(11) Continuous learning: Continuous learning, also referred to as life-long learning (Life-long learning), is a research direction aimed at resolving this type of problem. A goal of continuous learning is to enhance adaptability of a model, so that the model can learn knowledge of different tasks at different moments without forgetting a feature of a previous task.

(12) Page table: The page table is a data structure that can be used to record a mapping relationship between two types of data, and is usually used to convert a virtual address into a physical address. A hierarchical page table is also a type of page table. The page table is stored in a storage medium. A base address of the page table, also briefly referred to as a page table base address, is a start address of a physical address at which the page table is stored. A size of the page table determines a value range of a virtual address corresponding to the page table. A virtual address in the page table is a virtual address of an instance or a device that uses the page table, and indicates an offset of a physical address of a specific location (or an entry) in the page table relative to the page table base address. Data stored at a specific location in the page table is a physical address in a physical address space of an instance or a device that uses the page table. One page table includes a plurality of entries, and each entry may indicate a mapping relationship between one virtual address and one physical address. It should be understood that the entry described herein is a functional description, and a specific implementation of the entry is not limited in this application. For example, a mapping relationship between one virtual address and one physical address may be cross-level, or a mapping relationship between one virtual address and one physical address may be indirect. The page table in this application may be specifically a multi-level page table.

(13) Transformer layer

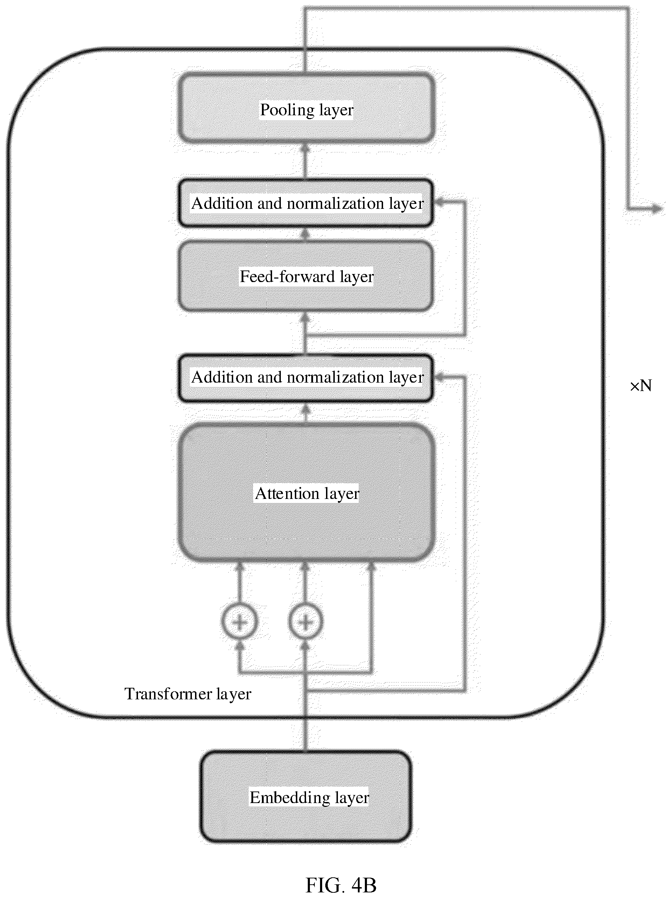

FIG. 4B is a diagram of an architecture of a transformer layer. As shown in FIG. 4B, a neural network includes an embedding layer and at least one transformer layer. The at least one transformer layer may be N transformer layers (N is an integer greater than 0). Each transformer layer includes an attention layer, an addition and normalization (add & norm) layer, a feed-forward (feed-forward) layer, and an addition and normalization layer that are sequentially adjacent. At the embedding layer, embedding processing is performed on a current input, to obtain a plurality of feature vectors. At the attention layer, P input vectors are obtained from a layer preceding the transformer layer, any first input vector in the P input vectors is used as a center, and an intermediate vector corresponding to the first input vector is obtained based on a degree of correlation between each input vector within a preset attention window and the first input vector. In this way, P intermediate vectors corresponding to the P input vectors are determined. At a pooling layer, the P intermediate vectors are combined into Q output vectors. A plurality of output vectors obtained at a last transformer layer in the at least one transformer layer are used as feature representations of the current input.

The following describes the foregoing steps in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a piece of text or a sentence. The text may be Chinese text, or English text, or text in another language. After the current input is obtained, embedding processing may be performed on all words in the current input at the embedding layer, to obtain feature vectors of all the words. In some embodiments, as shown in FIG. 4B, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid (jihao ying huanhuabei)", where a position of "what (ji)" may be represented as a first position, a position of "date (hao)" may be represented as a second position, and so on. In some examples, the positions of all the words may be positions of all the words relative to each other. For example, the current input is still "what date should the debt be repaid (jihao ying huankuan)", where a position of "what (ji)" may be represented as preceding "date (hao)", a position of "date (hao)" may be represented as following "what (ji)" and preceding "should (ying)", and so on. When the word embedding vectors and the position vectors of all the words in the current input are obtained, the position vectors of all the words and the corresponding word embedding vectors may be combined to obtain the feature vectors of all the words, namely, the plurality of feature vectors corresponding to the current input. The plurality of feature vectors may be represented as an embedding matrix with a preset dimension. For the plurality of feature vectors, a quantity of the feature vectors may be set to M, and the preset dimension may be set to a dimension of H. In this case, the plurality of feature vectors may be represented as an $M \times H$ embedding matrix.

Then, the P input vectors are obtained from a layer preceding a first transformer layer, the any first input vector in the P input vectors is used as the center, and the intermediate vector corresponding to the first input vector is obtained based on the degree of correlation between each input vector within the preset attention window and the first input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

In some embodiments, the first transformer layer may be a layer following the embedding layer, and the P input vectors are the plurality of feature vectors obtained from the embedding layer. In some embodiments, the at least one transformer layer in the neural network provided in this embodiment of this specification further includes a second transformer layer. The second transformer layer is a layer preceding first self-attention. **In** this case, the P input vectors are P output vectors that are output from the second transformer layer. At the last transformer layer in the neural network, the plurality of output vectors obtained by performing the foregoing steps may be used as the feature representations of the current input. The feature representation is a feature representation, of the current input, suitable for computer processing.

(14) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

$Lx=\|Source\|$ represents a length of a source. The formula means that constituent elements in the source are assumed to include a series of data pairs. **In** this case, an element query in a target (Target) is provided, a similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value (value) corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

In recent years, with the rapid development of computing chip technologies and large-scale computing clusters, an increasing quantity of large models are emerging, and large models with hundreds of billions or even trillions of parameters become a mainstream technology trend recently and even for some time in the future. However, a core problem of the large model lies in extremely high training and usage costs. The large model usually needs an ultra-large-scale cluster including hundreds or even thousands of computing units such as GPUs, TPUs, or NPUs to perform computation for weeks or even months, resulting in costs ranging from millions to tens of millions of dollars. Another problem related to the core problem is how to design and train such a high-cost model to fully unleash value of the model and to prepare for possible unknown future application scenarios at the beginning of design. Given the high costs, it is impossible to retrain the model repeatedly. Therefore, there is a need for a form to preserve previous training results and prepare for possible future application scenarios.

In an implementation solution, a large-scale model may be divided into a plurality of network units, and corresponding network units are configured for different input samples (for example, different word vectors). When an input sample is used to train the model, only a network unit corresponding to the input sample among the plurality of network units is updated, and an updated network unit is stored for invocation in a next update.

In conventional technologies, a memory in a computing unit is usually used to store a large model. However, the memory in the computing unit is relatively small, limiting a size of the large-scale model.

To resolve the foregoing problems, this application provides a data processing method.

FIG. 5 is a diagram of an embodiment of a data processing method according to an embodiment of this application. As shown in FIG. 5, the data processing method provided in this embodiment of this application includes the following steps.

501: Determine, based on a target mapping relationship, one or more target network units corresponding to a target word vector (token) and a storage address of the one or more target network units, where storage space corresponding to the storage address is located in storage space outside a computing unit.

In this embodiment of this application, an entity for performing step 501 may be a terminal device, and the terminal device may be a portable mobile device, for example, but not limited to a mobile or portable computing device (for example, a smartphone), a personal computer, a server computer, a handheld device (for example, a tablet computer) or a laptop device, a multiprocessor system, a game console or controller, a microprocessor-based system, a set-top box, a programmable consumer electronic product, a mobile phone, a mobile computing and/or communication device having a wearable or accessory form factor (for example, a watch, glasses, a headset, or an earbud), a network PC, a minicomputer, a mainframe computer, or a distributed computing environment including any of the foregoing systems or devices.

In this embodiment of this application, the entity for performing step 501 may be a cloud-side server.

For ease of description, the forms of the entity for performing step 501 are not differentiated in the following description, and are all described as a training device.

In a possible implementation, the target network unit is a feed-forward network FFN. The target network unit may also be referred to as an expert network in this embodiment of this application.

In a possible implementation, a mapping relationship (also referred to as a multi-valued mapping table or a multi-level mapping table) between different training samples (word vectors (tokens)) and target network units may be pre-constructed. When model training is performed on a large-scale network with the different training samples (the word vectors (tokens)), a network structure at a location of a target network unit in the large-scale network may be configured as a network unit indicated in the mapping relationship or a combination of network units indicated in the mapping relationship.

The target mapping relationship may include a first target mapping relationship and a second target mapping relationship. The first target mapping relationship may indicate a mapping relationship between a word vector and a network unit, specifically, a mapping relationship between the word vector and an identifier ID corresponding to the network unit. An identifier is used to differentiate a type of object or an object from another object of the same type or a different type, for example, an identifier of a node, an identifier of a network, or an identifier of a network interface card. The identifier may be a name or a number. Alternatively, a differentiating feature may be used as the identifier, for example, a type is used as the identifier. Implementations of various identifiers are not limited in this application, provided that the identifiers can achieve differentiation.

In conventional technologies, a mapping relationship between a training sample (a word vector (token)) and a network unit is constructed by using a hash (hash). **In** a hash, one training sample can correspond to only one network unit, and there is a value range limitation of the hash. Therefore, as the training sample increases, a large quantity of different training samples may correspond to a same network unit, which affects precision of a trained model. **In** this application, the mapping relationship between the training sample (a word vector (token)) and the network unit is recorded by using a mapping table, so that one training sample can correspond to a plurality of network units. In addition, because there is no value range limitation, a large quantity of different training samples do not correspond to a same network unit, which can increase the precision of the trained model.

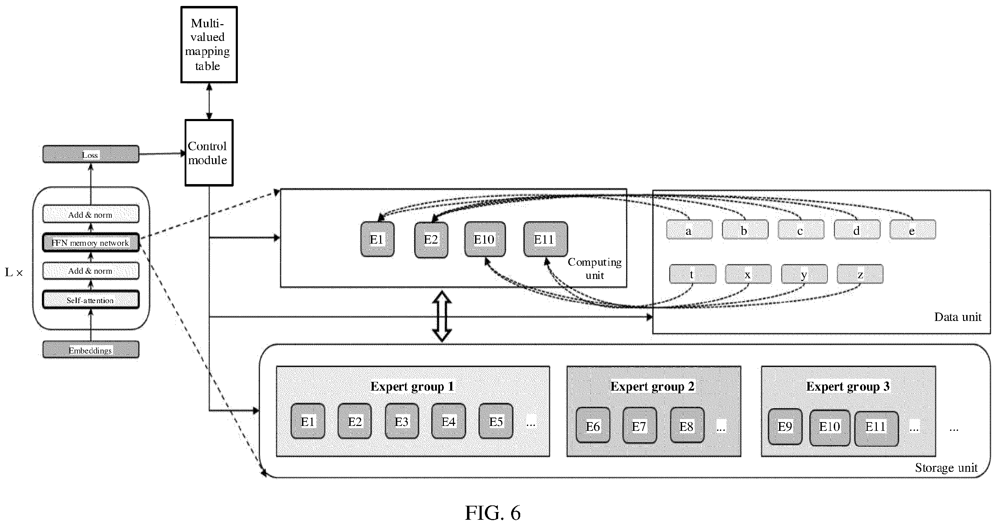

In a possible implementation, the large-scale network (for example, PanGu-Alpha or an FFN in a transformer) may be replaced with a storage unit in FIG. 6, namely, several experts arranged in parallel. Groups to which the experts belong are determined by a multi-valued mapping table. Each multi-valued mapping table includes many key-value (key-value) pairs. Optionally, tokens (tokens) in a vocabulary serve as keys (keys) of the multi-valued mapping table, and values (values) are IDs of experts, for example, E1 to E11 in the figure. After the multi-valued mapping table is constructed, during training, a control module may dynamically extract a required computing unit for efficient computation from the storage unit based on data of a data unit. Optionally, whether to dynamically expand an expert module of the storage unit may also be determined based on a loss value.

Construction of the foregoing multi-valued mapping table:

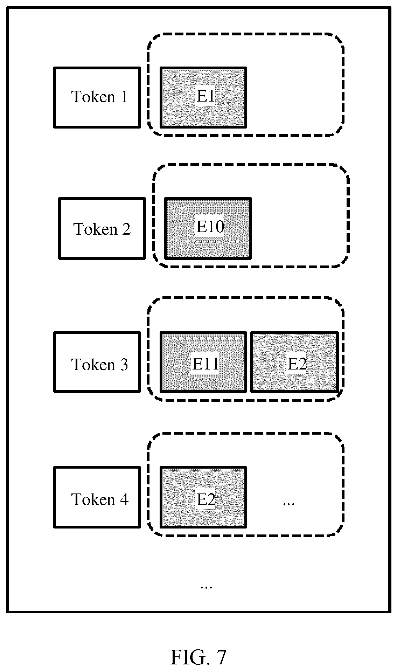

The groups are determined by a user during construction of the multi-valued mapping table. For example, a multi-valued mapping table shown in FIG. 7 may be constructed. The user first determines a quantity G of groups to be modeled and an initialized quantity K_g of experts in each group. The user determines a specific group or specific groups to which a token of the vocabulary belongs. For example, the user may perform grouping based on a language of the token, where Chinese is an expert group and English is another expert group. Some tokens, for example, some Arabic numerals, belong to two expert groups. After grouping is completed, because the quantity of experts in each group is fixed, a token belonging to the expert group may be allocated, based on a specific function, an expert for mapping, for example, randomly or through a sequential modulo operation. Before training is started, an initial version of the multi-valued mapping table needs to be constructed, and then training is started.

In a possible implementation, the computing unit is a graphics processing unit GPU, a tensor processing unit TPU, or a neural-network processing unit NPU.

In a possible implementation, the storage space corresponding to the storage address is located in a memory, a network storage, or a hard disk.

In a possible implementation, the target mapping relationship includes a first target mapping relationship, the first target mapping relationship indicates a plurality of word vectors and one or more network units corresponding to each word vector, and the first target mapping relationship is specifically a mapping table.

In a possible implementation, the target mapping relationship may further include a third target mapping relationship, and the third target mapping relationship indicates a storage location of each network unit. The storage location may be represented by a physical address or a virtual address corresponding to storage space. A unique corresponding physical address may be determined based on the virtual address. For example, the address may include a start address and an offset.

A target network unit in a large-scale model is stored in a storage location outside a computing unit. Therefore, when a current training sample is a corresponding word vector, one or more corresponding target network units are extracted from the storage location outside the computing unit. Because storage space of the storage location outside the computing unit may be set to be relatively large, through separation of storage and compute, a size of the large-scale model can be increased and scalability and flexibility of the large-scale model can be improved.

**In** a possible implementation, the target mapping relationship may be modified by the user.

Specifically, in a possible implementation, before the one or more target network units corresponding to the target word vector and the storage address of the one or more target network units are determined based on the target mapping relationship, modification information of the user for the second target mapping relationship may further be received, where the second target mapping relationship includes a plurality of word vectors and a network unit corresponding to each word vector; and the second target mapping relationship may be modified based on the modification information, to obtain the target mapping relationship.

The modification information may be used to modify a network unit corresponding to a specific word vector in the second target mapping relationship or modify a correspondence between a word vector and a network unit.

In a possible implementation, the modification information indicates at least one of the following: deleting, replacing, or adding a network unit corresponding to at least one word vector in the second target mapping relationship; and deleting, replacing, or adding a mapping relationship included in the second target mapping relationship, where the mapping relationship is a word vector and a network unit corresponding to the word vector.

In addition, a system may modify a mapping relationship based on a situation of model training.

In a possible implementation, before the one or more target network units corresponding to the target word vector and the storage address of the one or more target network units are determined based on the target mapping relationship, in a process of training a neural network based on the target word vector, a network unit corresponding to the target word vector in the second target mapping relationship may be added based on a case in which a decrease degree of a training loss is less than a threshold, to obtain the target mapping relationship. (When the decrease degree of the training loss is relatively low, it may indicate that current performance of the model cannot be further improved. In this case, a network unit may be added to change a structure of the neural network, so that the training loss can continue to decrease.)

In a possible implementation, a mapping relationship and a large-capacity data structure for the mapping relationship may be determined, to support capacity expansion and reduction of a memory network in this embodiment and achieve effect of continuous learning. Continuous learning is a technology that enables a model to continue to learn new data after learning data for a period of time, so that previously learned knowledge can be prevented from being forgotten and new knowledge can be learned. An optional procedure of this embodiment is as follows.

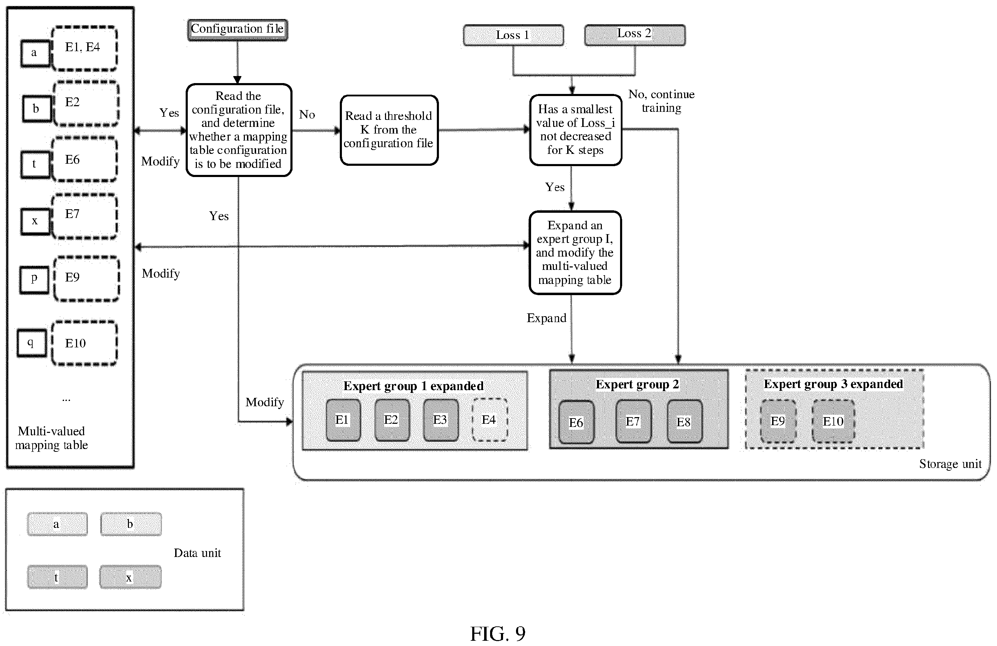

As shown in FIG. 9, steps are as follows:

Step 1: During training, read a configuration file and determine whether a mapping table is to be modified; if the mapping table is to be modified, modify the multi-valued mapping table and a corresponding storage unit based on configuration, where the configuration is very flexible, and may be expansion of a same expert group such as addition of E4 in an expert group in the figure, or may be addition of a new expert group such as addition of an expert group 3 in the figure; and then continue to perform training.

Step 2: Read an expansion threshold K from the configuration file, and for a loss of each expert group, record a smallest value of the loss; and if the smallest value has not been updated for K consecutive steps, it is considered that a loss of the model no longer decreases, and go to step 3; otherwise, continue to perform training.

Step 3: After the condition in step 2 is satisfied, for an expert group corresponding to a loss that does not decrease, modify the multi-valued mapping table; and assuming that an original expert group has M experts, add, according to a specific rule, a new expert for mapping such as E4 in the figure, to an expert to which 1/M of tokens is mapped in the multi-valued mapping table. The rule may be 1/M of the tokens that is most frequent, or 1/M of the tokens that is randomly selected.

Step 4: Adjust a computational graph in real time based on a framework, allocate new storage space to the added expert E4, and continue to perform training.

In this way, a memory module of the model can be scaled to expand or reduce a model capacity for different scenarios.

502: Obtain the one or more target network units from the storage space corresponding to the storage address, where the one or more target network units are used to construct the neural network.

In a possible implementation, after the storage address is obtained, the one or more target network units may be obtained from the storage space corresponding to the storage address, and the one or more target network units may be used to construct the neural network. Specifically, the one or more target network units may be used to construct a network structure at a location corresponding to the target network unit.

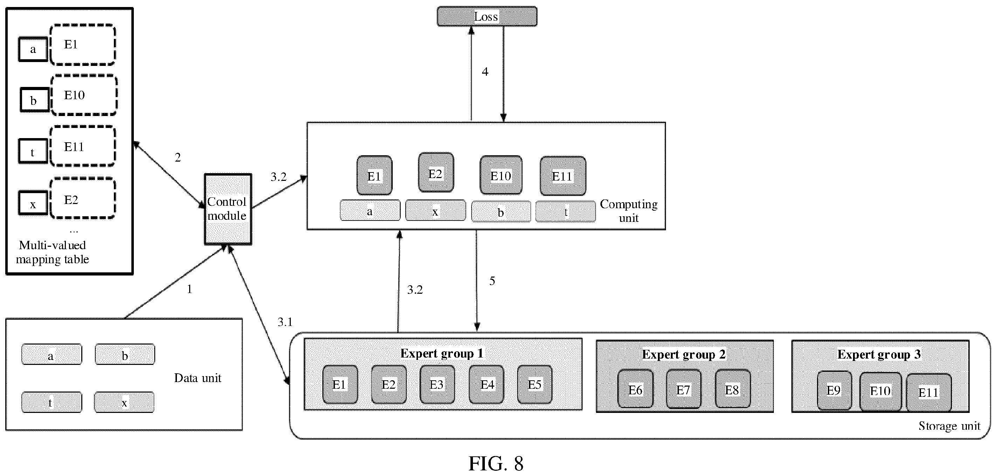

A diagram of a specific procedure may be shown in FIG. 8, and mainly includes the following steps:

Step 1: At the start of an iteration of training, the control module reads data for this iteration.

Step 2: Query a corresponding number of an expert in a multi-valued mapping table by using the data as a key, based on the data read in the previous step.

Step 3: Two steps are involved: First find a memory address of the corresponding expert based on the expert number obtained in the previous step; and then in 3.2, extract the expert that is to be used or freeze an expert that is not to be used, based on the found memory address. The extracting may be: constructing a computational sub-graph in new memory space, and copying the corresponding expert in a storage unit to new computing space; or in the storage unit, managing the corresponding expert in the storage unit as a computing unit through virtual memory mapping. During the freezing, a freezing operation is propagated on the computational graph to a corresponding backward computation node and optimizer update node, to ensure that the expert that is not to be used for computation in this round does not need to participate in forward computation, backward computation, and computation for an optimizer update.

503: Perform, through the computing unit based on the target word vector, a training process corresponding to the neural network.

In a possible implementation, the performing, through the computing unit, a training process corresponding to the target neural network is for obtaining an updated target neural network, the updated target neural network includes one or more updated target network units, and data in the storage space corresponding to the storage address is updated based on the one or more updated target network units, for a next invocation.

As shown in FIG. 8, an optional implementation step of this embodiment of this application may include the following steps:

Step 4: Perform actual computation based on the data read in step 1 and the corresponding expert through the computing unit constructed in the previous step, compute a loss through forward propagation, perform backward computation, and update an expert parameter through an optimizer.

Step 5: Synchronize an updated expert parameter in the computing unit with a corresponding expert parameter in the storage unit.

The idea of the foregoing steps is to find a sparse expert memory unit, namely, the expert in the storage unit, through memory management, and ensure that only the activated expert is computed, and the remaining expert that is not to be used for computation does not participate in any forward computation, backward computation, or computation for an optimizer update. This ensures that a sparse memory network has no redundancy in computation, thereby improving training efficiency.

In a possible implementation, the target mapping relationship includes a plurality of word units and a network unit corresponding to each word unit, and a network unit corresponding to a part of the word units may be further determined based on the converged neural network from the plurality of word units included in the target mapping relationship, where the network unit that corresponds to the part of the word units and that is in the converged neural network is used to construct the target neural network, and the target neural network is used to perform model inference.

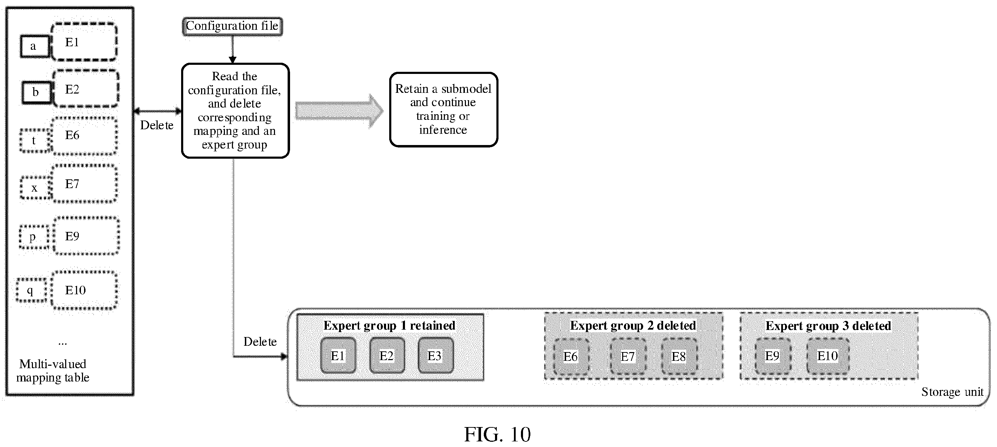

The foregoing process may be referred to as sub-model extraction. For an example procedure, refer to FIG. 10.

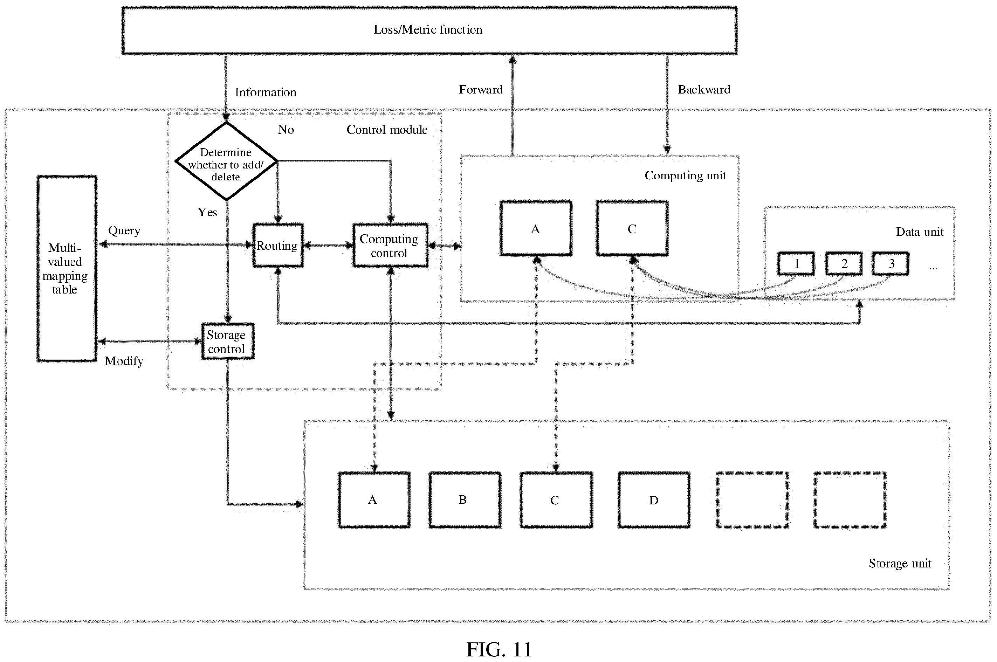

Embodiments of this application provide a new scalable memory network design and an efficient training algorithm for the new scalable memory network design, to ensure that while a large model formed by such network modules can be efficiently trained, the model can acquire a continuous learning capability through scaling of a memory module, and therefore ensure that the model keeps up-to-date with latest knowledge. A system architecture is shown in FIG. 11.

1. Multi-valued mapping table (multi-valued mapping): This module is a feasible data structure basis of this patent. Different from the hash mentioned the foregoing related work, mapping is a key-value pair relationship that is directly stored, which does not need to be mapped to a fixed index range by using a hash function. Therefore, there is no collision problem for mapping. This ensures that key information is not lost in a relationship constructed with a mapping data structure. Multi-valued mapping is used to construct a key value-set mapping pair. The set may include multiple elements. This ensures that the mapping relationship herein is not confined to a one-to-one mapping relationship. The multi-valued mapping table in this patent supports a plurality of types of operations, for example, modification such as query, insertion, and deletion. These operations work with a control module to be described in the following, to implement the training algorithm and a life-long learning algorithm described in this patent.

2. Control module: The control module is a control module indicated by dashed lines shown in the figure, is a core of the system and specifically has two main functions:

One is a function designed to complete a life-long learning capability. After the control module obtains information from a loss or a metric function, if it is determined that there is a need to increase a quantity of memory networks, the algorithm enters a "Yes" branch. A storage control unit first modifies the multi-valued mapping table by adding or deleting a key-value pair in mapping, and then the storage control unit allocates or releases corresponding memory space in a sub-graph storage section.

The other is a function designed to implement high-performance training. If it is determined to be "No", in other words, there is no need to add or delete a memory network, the algorithm enters a "No" branch. In this branch, routing of the control module can read the data of a current data unit and query a mapping relationship in the multi-valued mapping table, to obtain a number of a memory network that is to be used for computation this time. In addition, a computing control module extracts, based on a query result in a specific manner, a sub-graph that is to be used for computation.

The specific manner may be pulling, or constructing a new sub-graph, or freezing, in a position at which the sub-graph is stored, a part that is not to be used for computation, to ensure that only a part that is to be used for computation is computed. In addition, this operation is propagated to all related computing parts of a computational graph. In a large-scale distributed scenario, corresponding gradient transmission is not performed, so that a computation amount and a communication amount of the entire model are greatly reduced.

3. Memory network module: The memory network module refers to a storage unit and a computing unit in the figure. The memory module includes a linear network, and generally includes more than one linear network. Each linear network has a number, for example, A, B, C, or D in the figure, which is used to differentiate different linear networks. The number is also an element of a value in a key-value pair in the multi-valued mapping table. A control apparatus may find an address of a corresponding memory network based on the value, and perform an operation such as extraction, copy, deletion, or addition on the corresponding network. Each network memorizes a feature that is of the layer and that corresponds to a training entity in a current state.

4. Data unit: The data unit may be training data, or may be an encoded intermediate result.

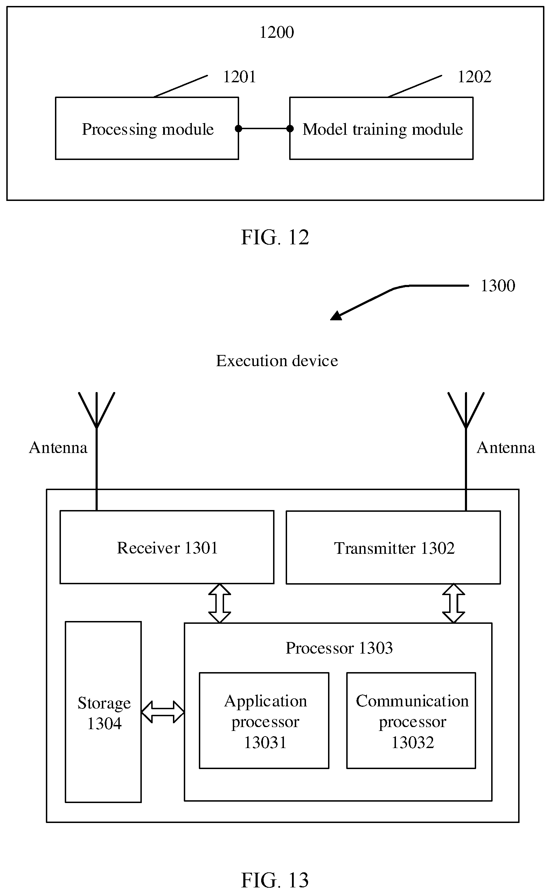

The following describes, from a perspective of an apparatus, a data processing apparatus provided in an embodiment of this application. FIG. 12 is a diagram of a structure of a data processing apparatus according to an embodiment of this application. As shown in FIG. 12, a data processing apparatus 1200 provided in this embodiment of this application includes the following modules.

A processing module 1201 is configured to: determine, based on a target mapping relationship, one or more target network units corresponding to a target word vector (token) and a storage address of the one or more target network units, where storage space corresponding to the storage address is located in storage space outside a computing unit; and obtain the one or more target network units from the storage space corresponding to the storage address, where the one or more target network units are used to construct a neural network.

For specific descriptions of the processing module 1201, refer to descriptions of step 501 and step 502 in the foregoing embodiment. Details are not described herein again.

A model training module 1202 is configured to perform, through the computing unit based on the target word vector, a training process corresponding to the neural network.

For specific descriptions of the model training module 1202, refer to descriptions of step 503 in the foregoing embodiment. Details are not described herein again.

In a possible implementation, the target network unit is a feed-forward network FFN.

In a possible implementation, the computing unit is a graphics processing unit GPU, a tensor processing unit TPU, or a neural-network processing unit NPU.

In a possible implementation, the storage space corresponding to the storage address is located in a memory, a network storage, or a hard disk.

In a possible implementation, the target mapping relationship includes a first target mapping relationship, the first target mapping relationship indicates a plurality of word vectors and one or more network units corresponding to each word vector, and the first target mapping relationship is specifically a mapping table.

In a possible implementation, the performing, through the computing unit, a training process corresponding to the target neural network is for obtaining an updated target neural network, the updated target neural network includes one or more updated target network units, and the processing module is further configured to:

update, based on the one or more updated target network units, data in the storage space corresponding to the storage address.

In a possible implementation, before the determining, based on a target mapping relationship, one or more target network units corresponding to a target word vector and a storage address of the one or more target network units, the processing module is further configured to:

receive modification information of a user for a second target mapping relationship, where the second target mapping relationship includes a plurality of word vectors and a network unit corresponding to each word vector; and

modify the second target mapping relationship based on the modification information, to obtain the target mapping relationship.

In a possible implementation, the modification information indicates at least one of the following:

deleting, replacing, or adding a network unit corresponding to at least one word vector in the second target mapping relationship; and

deleting, replacing, or adding a mapping relationship included in the second target mapping relationship, where the mapping relationship is a word vector and a network unit corresponding to the word vector.

In a possible implementation, before the determining, based on a target mapping relationship, one or more target network units corresponding to a target word vector and a storage address of the one or more target network units, the processing module is further configured to:

in the process of training the neural network based on the target word vector, add, based on a case in which a decrease degree of a training loss is less than a threshold, a network unit corresponding to the target word vector in a second target mapping relationship, to obtain the target mapping relationship.

In a possible implementation, the target mapping relationship includes a plurality of word units and a network unit corresponding to each word unit, and the processing module is further configured to:

determine, based on a converged neural network, a network unit corresponding to a part of the word units from the plurality of word units included in the target mapping relationship, where the network unit that corresponds to the part of the word units and that is in the converged neural network is used to construct the target neural network, and the target neural network is used to perform model inference.

The following describes an execution device provided in an embodiment of this application. FIG. 13 is a diagram of a structure of an execution device according to an embodiment of this application. An execution device 1300 may be specifically a mobile phone, a tablet computer, a notebook computer, an intelligent wearable device, a server, or the like. This is not limited herein. The execution device 1300 implements a function of the image processing method in the embodiment corresponding to FIG. 10. Specifically, the execution device 1300 includes a receiver 1301, a transmitter 1302, a processor 1303, and a storage 1304 (there may be one or more processors 1303 in the execution device 1300). The processor 1303 may include an application processor 13031 and a communication processor 13032. **In** some embodiments of this application, the receiver 1301, the transmitter 1302, the processor 1303, and the storage 1304 may be connected through a bus or in another manner.

The storage 1304 may include a read-only memory and a random access memory, and provide instructions and data to the processor 1303. Apart of the storage 1304 may further include a non-volatile random access memory (non-volatile random access memory, NVRAM). The storage 1304 stores a processor and operation instructions, an executable module or a data structure, a subset thereof, or an extended set thereof. The operation instructions may include various operation instructions for implementing various operations.

The processor 1303 controls an operation of the execution device. **In** a specific application, the components of the execution device are coupled together through a bus system. **In** addition to a data bus, the bus system may further include a power bus, a control bus, a status signal bus, and the like. However, for clear description, various types of buses all are referred to as the bus system in the figure.

The method disclosed in embodiments of this application may be applied to the processor 1303, or implemented by the processor 1303. The processor 1303 may be an integrated circuit chip and has a signal processing capability. In an implementation process, the steps in the foregoing methods can be implemented through a hardware integrated logic circuit in the processor 1303, or through instructions in a form of software. The processor 1303 may be a general-purpose processor, a digital signal processor (digital signal processor, DSP), a microprocessor, a microcontroller, or a processor suitable for AI computation such as a vision processing unit (vision processing unit, VPU) or a tensor processing unit (tensor processing unit, TPU), and may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the storage 1304. The processor 1303 reads information in the storage 1304, and completes steps 501 to 503 in the foregoing embodiment in combination with hardware of the processor 1303.

The receiver 1301 may be configured to: receive input digit or character information, and generate a signal input related to a related setting and function control of the execution device. The transmitter 1302 may be configured to output digit or character information through a first interface. The transmitter 1302 may be further configured to send instructions to a disk group through the first interface, to modify data in the disk group. The transmitter 1302 may further include a display device such as a display.

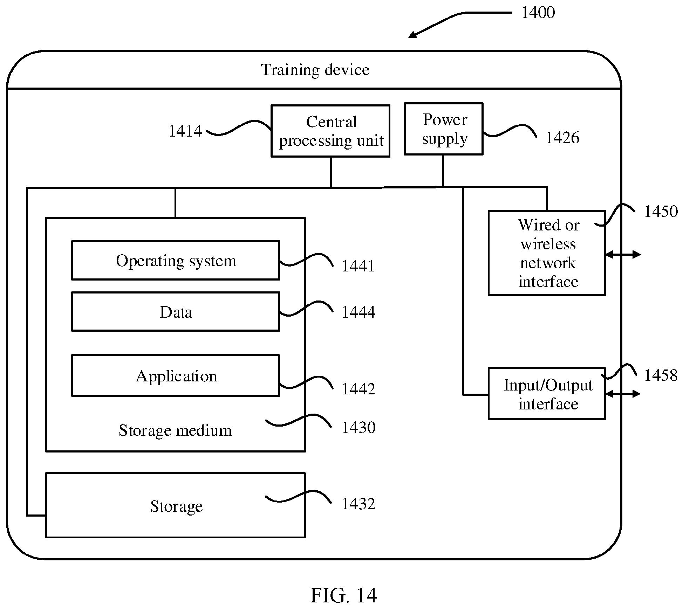

An embodiment of this application further provides a training device. FIG. 14 is a diagram of a structure of a training device according to an embodiment of this application. Specifically, a training device 1400 may be the data processing apparatus described in the foregoing embodiment. The training device 1400 is implemented by one or more servers. The training device 1400 may vary greatly with configuration or performance, and may include one or more central processing units (central processing units, CPUs) 1414 (for example, one or more processors), a storage 1432, and one or more storage media 1430 (for example, one or more mass storage devices) that store an application 1442 or data 1444. The storage 1432 and the storage medium 1430 may be transient storage or persistent storage. A program stored in the storage medium 1430 may include one or more modules (not shown in the figure), and each module may include a series of instruction operations on the training device. Further, the central processing unit 1414 may be configured to: communicate with the storage medium 1430, and perform, on the training device 1400, a series of instruction operations in the storage medium 1430.

The training device 1400 may further include one or more power supplies 1426, one or more wired or wireless network interfaces 1450, one or more input/output interfaces 1458, or one or more operating systems 1441, for example, Windows Server™, Mac OS X™, Unix™, Linux™, and FreeBSD™.

An embodiment of this application further provides a computer program product including computer-readable instructions. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program for processing a signal, and when the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in the execution device to perform the model training method described in the foregoing embodiments, or a chip in the training device to perform steps related to model training in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

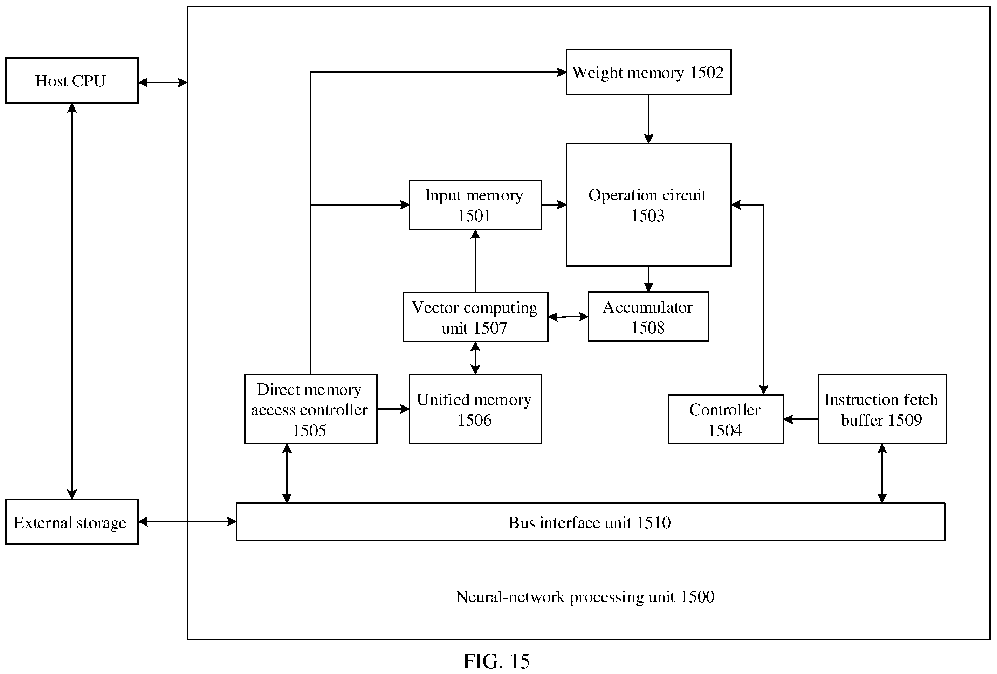

Specifically, FIG. 15 is a diagram of a structure of a chip according to an embodiment of this application. The chip may be represented as a neural-network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a storage and perform a multiplication operation.

In some implementations, the operation circuit 1503 includes a plurality of process engines (Process Engines, PEs) inside. In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight memory 1502, and buffers the data on each PE in the operation circuit. The operation circuit fetches data of the matrix A from an input memory 1501, performs a matrix operation on the data of the matrix A and the matrix B, and stores an obtained partial result or an obtained final result of the matrix in an accumulator (accumulator) 1508.

A unified memory 1506 is configured to store input data and output data. Weight data is directly transferred to the weight memory 1502 through a direct memory access controller DMAC (Direct Memory Access Controller, DMAC) 1505. The input data is also transferred to the unified memory 1506 through the DMAC.

A BIU is a bus interface unit, namely, a bus interface unit 1510, and is used for interaction between an AXI bus and the DMAC and between the AXI bus and an instruction fetch buffer (Instruction Fetch Buffer, IFB) 1509.

The bus interface unit (Bus Interface Unit, BIU for short) 1510 is used by the instruction fetch buffer 1509 to obtain an instruction from an external storage, and is further used by the direct memory access controller 1505 to obtain original data of the input matrix A or original data of the weight matrix B from the external storage.

The DMAC is mainly configured to: transfer input data in the external storage DDR to the unified memory 1506, transfer weight data to the weight memory 1502, or transfer input data (data) to the input memory 1501.

A vector computing unit 1507 includes a plurality of operation processing units. When necessary, the vector computing unit 1507 performs further processing on an output of the operation circuit, for example, vector multiplication, vector addition, an exponential operation, a logarithmic operation, or value comparison. The vector computing unit 1507 is mainly used for non-convolutional/fully-connected layer network computation in a neural network, such as batch normalization (batch normalization), pixel-level summation, and upsampling of a feature map.

In some implementations, the vector computing unit 1507 can store a processed output vector in the unified memory 1506. For example, the vector computing unit 1507 may apply a linear function or a non-linear function to the output of the operation circuit 1503, for example, perform linear interpolation on a feature plane extracted at a convolutional layer, or add value vectors to generate an activation value. In some implementations, the vector computing unit 1507 generates a normalized value, a pixel-level summation value, or a normalized value and a pixel-level summation value. In some implementations, the processed output vector can be used as an activation input of the operation circuit 1503, for example, to be used at a subsequent layer in the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external storage is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located at one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules are in a communication connection with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated storage, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the prior art may be implemented in a form of software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A data processing method, wherein the method comprises:

   determining, based on a target mapping relationship, one or more target network units corresponding to a target word vector token and a storage address of the one or more target network units, wherein storage space corresponding to the storage address is located in storage space outside a computing unit;
   obtaining the one or more target network units from the storage space corresponding to the storage address, wherein the one or more target network units are used to construct a neural network; and
   performing, through the computing unit based on the target word vector, a training process corresponding to the neural network.

2. The method according to claim 1, wherein different target network units are different feed-forward networks FFNs.

3. The method according to claim 1 or 2, wherein the computing unit is a graphics processing unit GPU, a tensor processing unit TPU, or a neural-network processing unit NPU.

4. The method according to any one of claims 1 to 3, wherein the storage space corresponding to the storage address is located in a memory, a network storage, or a hard disk.

5. The method according to any one of claims 1 to 4, wherein the target mapping relationship comprises a first target mapping relationship, the first target mapping relationship indicates a plurality of word vectors and one or more network units corresponding to each word vector, and the first target mapping relationship is specifically a multi-level mapping table.

6. The method according to any one of claims 1 to 5, wherein the performing, through the computing unit, a training process corresponding to the target neural network is for obtaining an updated target neural network, the updated target neural network comprises one or more updated target network units, and the method further comprises: updating, based on the one or more updated target network units, data in the storage space corresponding to the storage address.

7. The method according to any one of claims 1 to 6, wherein before the determining, based on a target mapping relationship, one or more target network units corresponding to a target word vector and a storage address of the one or more target network units, the method further comprises:

receiving modification information of a user for a second target mapping relationship, wherein the second target mapping relationship comprises a plurality of word vectors and a network unit corresponding to each word vector; and

modifying the second target mapping relationship based on the modification information, to obtain the target mapping relationship.

8. The method according to any one of claims 5 to 7, wherein the modification information indicates at least one of the following:

deleting, replacing, or adding a network unit corresponding to at least one word vector in the second target mapping relationship; and

deleting, replacing, or adding a mapping relationship comprised in the second target mapping relationship, wherein the mapping relationship is a word vector and a network unit corresponding to the word vector.

9. The method according to any one of claims 1 to 6, wherein before the determining, based on a target mapping relationship, one or more target network units corresponding to a target word vector and a storage address of the one or more target network units, the method further comprises:
in the process of training the neural network based on the target word vector, adding, based on a case in which a decrease degree of a training loss is less than a threshold, a network unit corresponding to the target word vector in a second target mapping relationship, to obtain the target mapping relationship.

10. The method according to any one of claims 1 to 9, wherein the target mapping relationship comprises a plurality of word units and a network unit corresponding to each word unit, and the method further comprises:
determining, based on the converged neural network, a network unit corresponding to a part of the word units from the plurality of word units comprised in the target mapping relationship, wherein the network unit that corresponds to the part of the word units and that is in the converged neural network is used to construct the target neural network, and the target neural network is used to perform model inference.

11. A data processing apparatus, wherein the apparatus comprises:

a processing module, configured to: determine, based on a target mapping relationship, one or more target network units corresponding to a target word vector token and a storage address of the one or more target network units, wherein storage space corresponding to the storage address is located in storage space outside a computing unit; and

obtain the one or more target network units from the storage space corresponding to the storage address, wherein the one or more target network units are used to construct a neural network; and

a model training module, configured to perform, through the computing unit based on the target word vector, a training process corresponding to the neural network.

12. The apparatus according to claim 11, wherein the target network unit is a feed-forward network FFN.

13. The apparatus according to claim 11 or 12, wherein the computing unit is a graphics processing unit GPU, a tensor processing unit TPU, or a neural-network processing unit NPU.

14. The apparatus according to any one of claims 11 to 13, wherein the storage space corresponding to the storage address is located in a memory, a network storage, or a hard disk.

15. The apparatus according to any one of claims 11 to 14, wherein the target mapping relationship comprises a first target mapping relationship, the first target mapping relationship indicates a plurality of word vectors and one or more network units corresponding to each word vector, and the first target mapping relationship is specifically a mapping table.

16. The apparatus according to any one of claims 11 to 15, wherein the performing, through the computing unit, a training process corresponding to the target neural network is for obtaining an updated target neural network, the updated target neural network comprises one or more updated target network units, and the processing module is further configured to:
update, based on the one or more updated target network units, data in the storage space corresponding to the storage address.

17. The apparatus according to any one of claims 11 to 16, wherein before the determining, based on a target mapping relationship, one or more target network units corresponding to a target word vector and a storage address of the one or more target network units, the processing module is further configured to:

receive modification information of a user for a second target mapping relationship, wherein the second target mapping relationship comprises a plurality of word vectors and a network unit corresponding to each word vector; and
modify the second target mapping relationship based on the modification information, to obtain the target mapping relationship.

18. The apparatus according to any one of claims 15 to 17, wherein the modification information indicates at least one of the following:

deleting, replacing, or adding a network unit corresponding to at least one word vector in the second target mapping relationship; and
deleting, replacing, or adding a mapping relationship comprised in the second target mapping relationship, wherein the mapping relationship is a word vector and a network unit corresponding to the word vector.

19. The apparatus according to any one of claims 11 to 16, wherein before the determining, based on a target mapping relationship, one or more target network units corresponding to a target word vector and a storage address of the one or more target network units, the processing module is further configured to:
in the process of training the neural network based on the target word vector, add, based on a case in which a decrease degree of a training loss is less than a threshold, a network unit corresponding to the target word vector in a second target mapping relationship, to obtain the target mapping relationship.

20. The apparatus according to any one of claims 11 to 19, wherein the target mapping relationship comprises a plurality of word units and a network unit corresponding to each word unit, and the processing module is further configured to:
determine, based on the converged neural network, a network unit corresponding to a part of the word units from the plurality of word units comprised in the target mapping relationship, wherein the network unit that corresponds to the part of the word units and that is in the converged neural network is used to construct the target neural network, and the target neural network is used to perform model inference.

21. A computing device, wherein the computing device comprises a storage and a processor, the storage stores code, and the processor is configured to: obtain the code, and perform the method according to any one of claims 1 to 10.

22. A computer storage medium, wherein the computer storage medium stores one or more instructions, and when the instructions are executed by one or more computers, the one or more computers are enabled to perform the method according to any one of claims 1 to 10.

23. A computer program product, comprising code, wherein when the code is executed, the code is used to implement the method according to any one of claims 1 to 10.

Intelligent information chain

Smart product and industry application

| Translation/Text analysis/... | Voice/Visual/Image/... |

Data

Data processing:

| Data training/Machine learning/ Deep learning | Searching/ Inference/Decision- making | ... |

Infrastructure

| Sensor | Smart chip | Basic platform | ... |

IT value chain

FIG. 1

200

Data collection
device 260

Data stream

Database
230

Training device
220

Data
stream

Client
device
240

Input
data

Output
result

I/O
interface
212

Execution device 210

Recommendation
model 201

Computing module 211

Data storage
system 250

FIG. 2

300

Data storage system 250

Execution device 210

...

Communication network

Local device
301

Local device
302

Examples

FIG. 3

FIG. 4A

FIG. 4B

Determine, based on a target mapping relationship, one or more target network units corresponding to a target word vector token and a storage address of the one or more target network units, where storage space corresponding to the storage address is located in storage space outside a computing unit — 501

Obtain the one or more target network units from the storage space corresponding to the storage address, where the one or more target network units are configured to construct a neural network — 502

Perform, through the computing unit based on the target word vector, a training process corresponding to the neural network — 503

FIG. 5

FIG. 6

FIG. 7

FIG. 8

FIG. 9

FIG. 10

FIG. 11

EP 4 586 144 A1

1200

1201

1202

Processing module — Model training module

FIG. 12

1300

Execution device

Antenna

Antenna

Receiver 1301

Transmitter 1302

Processor 1303

Storage 1304

Application processor 13031

Communication processor 13032

FIG. 13

FIG. 14

FIG. 15

# INTERNATIONAL SEARCH REPORT

| International application No. |
| --- |
| **PCT/CN2023/120541** |

| A. | CLASSIFICATION OF SUBJECT MATTER |
| --- | --- |

G06N 3/0464(2023.01)i

According to International Patent Classification (IPC) or to both national classification and IPC

| B. | FIELDS SEARCHED |
| --- | --- |

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 神经网络, 模型, 向量, 映射, 网络单元, 更新, 替换, 拆分, 可扩展, 存储空间; neural network, model, vector, mapping, network elements, update, replace, split, scalable, storage space

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115879508 A (HUAWEI TECHNOLOGIES CO., LTD.) 31 March 2023 (2023-03-31) description, paragraphs 4-242, and figures 2-15 | 1-23 |
| A | CN 113902111 A (SHAOXING AIVA TECHNOLOGY CO., LTD.) 07 January 2022 (2022-01-07) entire document | 1-23 |
| A | CN 111047563 A (SHENZHEN DUYING MEDICAL TECHNOLOGY CO., LTD.) 21 April 2020 (2020-04-21) entire document | 1-23 |
| A | CN 109242092 A (SHENZHEN SENSETIME TECHNOLOGY CO., LTD.) 18 January 2019 (2019-01-18) entire document | 1-23 |
| A | CN 108062505 A (MICROSOFT TECHNOLOGY LICENSING LLC.) 22 May 2018 (2018-05-22) entire document | 1-23 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 December 2023** | **26 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120541**

| Patent document cited in search report | | | Publication date (day/month/year) | Patent family member(s) | | | Publication date (day/month/year) |
|---|---|---|---|---|---|---|---|
| CN | 115879508 | A | 31 March 2023 | None | | | |
| CN | 113902111 | A | 07 January 2022 | None | | | |
| CN | 111047563 | A | 21 April 2020 | CN | 111047563 | B | 01 September 2023 |
| CN | 109242092 | A | 18 January 2019 | CN | 109242092 | B | 12 February 2021 |
| CN | 108062505 | A | 22 May 2018 | EP | 3539050 | A1 | 18 September 2019 |
| | | | | WO | 2018089221 | A1 | 17 May 2018 |
| | | | | US | 2020074227 | A1 | 05 March 2020 |
| | | | | US | 11003949 | B2 | 11 May 2021 |
| | | | | CN | 108062505 | B | 18 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214438